# EUROPEAN PATENT APPLICATION

(11) **EP 2 071 944 A2**
(43) Date of publication of application: **24.06.2009**
(21) Application number: 08172021.1
(22) Date of filing: 17.12.2008
(51) Int. Cl.: A01K 31/00, A01K 1/015, A01K 31/04, A01B 33/02

(54) **A Machine for Treatment of Bedding in Poultry Farms**

(30) Priority: 20.12.2007 IT RE20070129
(71) Applicant: Carboni, Renzo, 42022 Boretto (Reggio Emilia) (IT)
(72) Inventor: Carboni, Renzo, 42022 Boretto (Reggio Emilia) (IT)
(74) Representative: Corradini, Corrado

(57) **Abstract**

A machine for treatment of bedding in animal rearing, comprising a rotating shaft (4), ton which at least a milling tool (6) is splined, which milling tool is provided with a splining flange (60), opposite faces of which are fitted with blades (61) projecting radially relative to the flange (60), a supporting structure (21) at least partially covering the rotating shaft (4) and the milling tool (6), and a scraper blade (7), positioned below the rotating shaft (4), serving to scrape and raise material in the space underlying the milling tool, the scraper blade (7) being fixed to the supporting structure (21) by way of at least a profiled plate (8) oriented perpendicular to the rotating shaft (4) and extending into the interspace between the blades (61) fitted on the opposite faces of the splining flange (60) of the at least a milling tool (6).

## Description

The present invention is a machine for the treatment of bedding in animal rearing contexts and in particular in poultry farms.

In the most common poultry farming systems, animals are reared inside large sheds, of varying lengths up to more than two hundred metres, and of widths from ten to fifteen metres. Inside the sheds feeding troughs are arranged parallel to the longitudinal walls of the shed and spaced from 2.5 to 5 metres from the walls, thereby forming two isles adjacent to the walls and a central isle between the feeding troughs for the passage of workers.

The sheds are designed to contain about five animals per square metre and many thousands of animals are housed in a single shed.

The shed floor is generally made of cement, and occasionally is tamped earth.

Before insertion of the newly-hatched animals, a layer of wood chippings, rice husks, or straw is generally laid on the floor, on which the droppings of the animals collect as they grow.

The accumulation of droppings occurs to a greater extent close to the feeding troughs, reaching a depth of up to thirty centimetres by the end of the rearing cycle. As a consequence of the fluids contained in the droppings and the trampling of the animals, the bedding tends to harden and become impermeable, encouraging among other things the formation of puddles or very humid areas.

Consequently, the good health of the animals is compromised.

In addition to the contamination caused by the presence of humid areas and the resulting hazards for the health of the animals, the hardening of the bedding also causes other phenomena that result in considerable damage for animal rearers.

Intensive feeding causes a disproportionate weight increase of animals relative to the strengthening of bone structure and towards the end of the rearing cycle the larger animals, for example turkeys, reach a weight that cannot be sustained by their skeletons. In particular, when the animals roost in order to rest, and the bedding is very hard, their sternums can easily break.

A machine exists of known type, designed to overcome these problems, comprising means for detaching and raising the bedding from the floor and feeding the layer of raised bedding to suitable means for shredding, from where the shredded material is projected towards means for screening.

The means for shredding generally comprise a rotating shaft onto which a plurality of milling tools is splined, the milling tools being individually provided with a splining flange on which radial blades are fitted oriented parallel to the shaft axis and exhibiting offset extremities parallel to the shaft.

The rotating shaft is rotatably coupled to the side walls of a supporting structure shaped substantially as a hood covering the milling tools such as to prevent the shredded material being accidentally projected into the surrounding space.

The means for detaching and lifting the bedding comprise a scraper blade oriented parallel to the rotating shaft and located below the rotating shaft and positioned such as not to interfere with the milling tools.

The scraper tool is fixed to the side walls of the supporting structure.

During the advancing of the machine over the ground the scraper blade detaches hardened and dried bedding from the floor, raising it to the level of the milling tools.

The milling tools are rotated in an opposite direction to the advancing direction of the machine, such that in addition to shredding the material, the bedding is also overturned and the shredded material is projected towards the means for screening located at the rear of the machine.

The machine is provided in both a large format, designed for attachment to an agricultural tractor and powered by a power take-off of the tractor, and in a smaller format designed for attachment to a motorized rotovator or similar work machine.

The action of the machine is to fraction, turn, and shred hardened bedding thereby creating a more comfortable, dryer and cleaner environment for the animals, providing obvious benefits for the animal rearer. The machine offers additional advantages in terms of the cost and quality of management of the production cycle, reducing the risk of infection and improving working conditions for the operators labouring inside animal rearing sheds.

A drawback of the machine is the fact that it can only be used with bedding made from wood chippings or rice husks, and it is not possible to use it with bedding made from straw or similar materials composed generally of filament-shaped objects.

Straw tends to become twisted around the rotating shaft supporting the milling tools and to accumulate between the side walls of the supporting structure and the adjacent milling tools.

These accumulations of straw hinder the desired shredding of the bedding and lead to a progressive entanglement and blocking of the rotor.

An aim of the present invention is to obviate the above mentioned problems of known technology, providing a machine of the type described above that can also be effectively used for the treatment of straw or similar bedding.

A further aim of the invention is to achieve the above mentioned aim by way of a simple, rational, and relatively inexpensive solution.

The aims are achieved by the characteristics of the invention as described in the independent claim 1. The dependent claims describe preferred and/or particularly advantageous embodiments of the invention.

In particular, a machine is provided for the processing of animal bedding comprising:
- a rotating shaft on which at least a milling tool is splined,
- a supporting structure designed to cover at least partially the rotating shaft and the milling tools,
- and a scraper blade destined to remain in contact with the floor in order to scrape and raise the material below the milling tool.

In the present invention, the milling tool is individually provided with a splining flange on opposite sides of which blades are attached projecting radially relative to the flange, and the scraper blade is fixed to the supporting structure by means of at least a profiled plate oriented orthogonally relative to the rotating shaft and extending into the interspace between the radial blades fixed on the opposite sides of the splining flange of the milling tool.

In particular, multiple milling tools are splined onto the rotating shaft, and the at least a profiled plate extends into the interspace of one of the milling tools present.

In this way, the scraper blade is no longer supported by the side walls of the supporting structure, and consequently the side walls do not extend down to ground level, thus preventing formation of accumulations of straw at the ends of the rotor. Furthermore, the profiled plate in the interspace of the milling tool prevents straw from accumulating around the splining flange, also serving as a counter-blade for the radial blades such that the radial blades can apply a scissor-like cutting action and chop the collected straw into short sections.

In a preferred embodiment of the invention the profiled plate supporting the scraper blade at least partially envelops the splining flange of the relative milling tool exhibiting a forward edge facing in an opposite direction to the rotation direction of the milling tools, the radial development of the profiled plate relative to the shaft extending from a minimum of less than the maximum milling diameter, to a maximum of greater than the maximum milling diameter. The maximum milling diameter is defined by the ends of the radial blades.

This ensures that the ends of the radial blades pass in front of the profiled plates during rotation, thereby obtaining a safer and more effective cutting action.

Preferably the forward edge of the profiled plate exhibits a rectilinear profile oriented radially with respect to the rotation axis of the rotating shaft.

Further characteristics and advantages of the invention will better emerge from the detailed description made herein, provided by way of non-limiting example in the accompanying figures of the drawings.

Figure 1 is a side view of a machine in a first embodiment of the invention, shown in cross-section along line I-I of figure 2.

Figure 2 is the cross-section along line II-II of figure 1.

Figure 3 is the cross-section along line III-III of figure 2.

Figure 4 is a schematic side view of a motor hoe equipped with a machine of a second embodiment of the invention.

Figure 5 is a side view of the machine of figure 4 in cross-section along line V-V of figure 6.

Figure 6 is a cross-section of line VI-VI of figure 5.

Figure 7 is the cross-section along line VII-VII of figure 6.

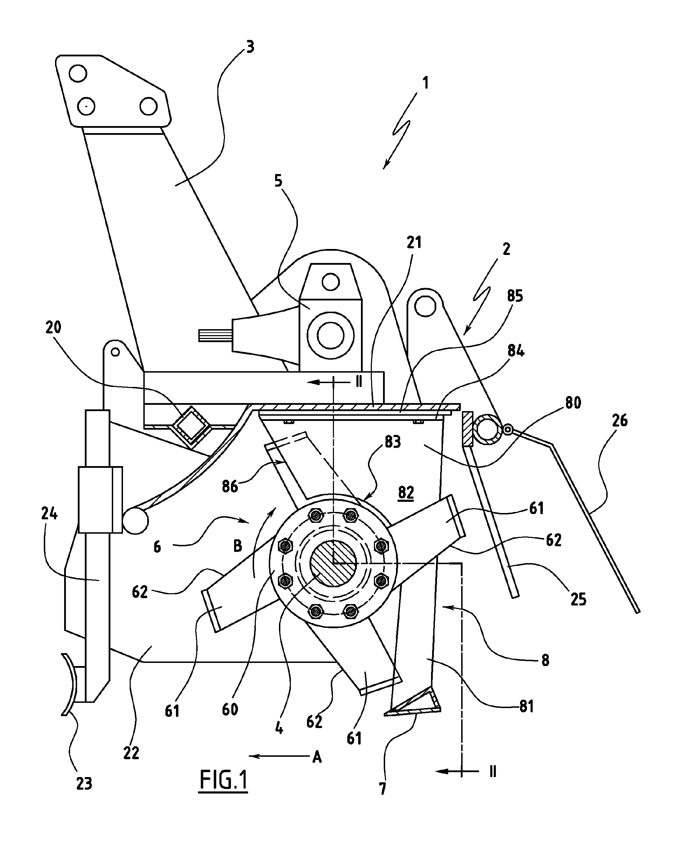

Figures 1 to 3 illustrate a machine 1 for treatment of bedding in poultry farms, designed for installation on an agricultural tractor or similar vehicle.

The normal advancing direction of the machine 1 is denoted by A in figure 1.

The machine 1 comprises a supporting structure 2 provided with means for coupling 3 to a common lifting device of the agricultural tractor.

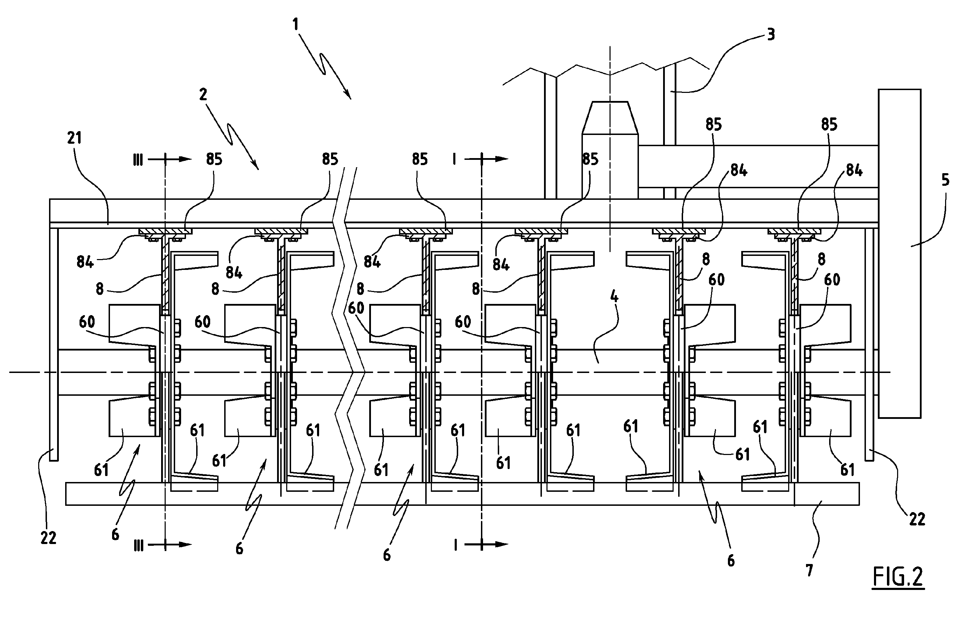

The supporting structure 2 comprises a sturdy horizontal support cross-member 20 fixed to the box-shaped casing, the casing preferably made of steel plate and comprising a covering plate 21 including a forward rounded portion, a horizontal flat portion, and two descending side-walls 22, fixed respectively to opposite ends of the covering plate 21 (see figure 2).

Rotatably coupled to the side walls 22 is a rotating shaft 4 exhibiting a transversally-oriented horizontal axis contained within the compartment defined by the box-shaped casing of the supporting structure 2.

The rotating shaft 4 is connected to a mechanical group 5 for transmission of motion and fitted outside the supporting structure 2, adjacent to a side wall 22, and designed for connection to the rear power take-off of the agricultural tractor. The normal direction of rotation of the shaft 4 is denoted by B in figure 1.

A series of identical milling tools 6 are splined onto the rotating shaft 4, each milling tool 6 comprising a splining flange 60, shaped substantially as a perforated disc oriented orthogonally to the rotating shaft 4 and coaxially engaged and fixed, for example welded, on the shaft.

On each side of the splining flange 60 a pair of identical blades 61 are fixed, each blade 61 being defined by a profiled plate lying parallel to the splining flange 60 and projecting radially relative to the flange 60, terminating with a curved end extending parallel to the rotating shaft 4.

The blades 61 are singly fixed to the splining flange 60 with bolts, and exhibit a sharp edge 62.

The blades 61 of each pair are substantially aligned along a diameter of the splining flange 60, with the relative sharp edges 62 facing in a same direction, in the example towards the direction of rotation of the shaft 4.

The two pairs of blades 61 fixed to the same splining flange 60 are reciprocally offset by about 90°.

Naturally the number and arrangement of the blades 61 on the faces of the splining flange 60 can vary.

The machine 1 also comprises a scraper blade 7, positioned below the rotating shaft 4, slightly rear of the axis of the rotating shaft 4, such as to remain in contact with the ground without interfering with the rotation of the milling tools 6. The scraper blade 7 is constituted by a profiled cross-member extending parallel to the rotating shaft 4 for an overall length approximately equal to the length of the rotating shaft 4, and exhibiting a constant substantially wedge-shaped transversal cross-section, wherein the vertex of the wedge is facing towards the machine's forward direction A (see figure 1).

As illustrated in figure 2, the scraper blade 7 is fixed to the supporting structure 2 by a plurality of steel plates 8, each plate 8 oriented orthogonally to the rotating shaft 4 and substantially coplanar with the splining flange 60 of a relative milling tool 6, such as to extend into the interspace between the pairs of blades 61 fitted on the opposite faces of the flange 60.

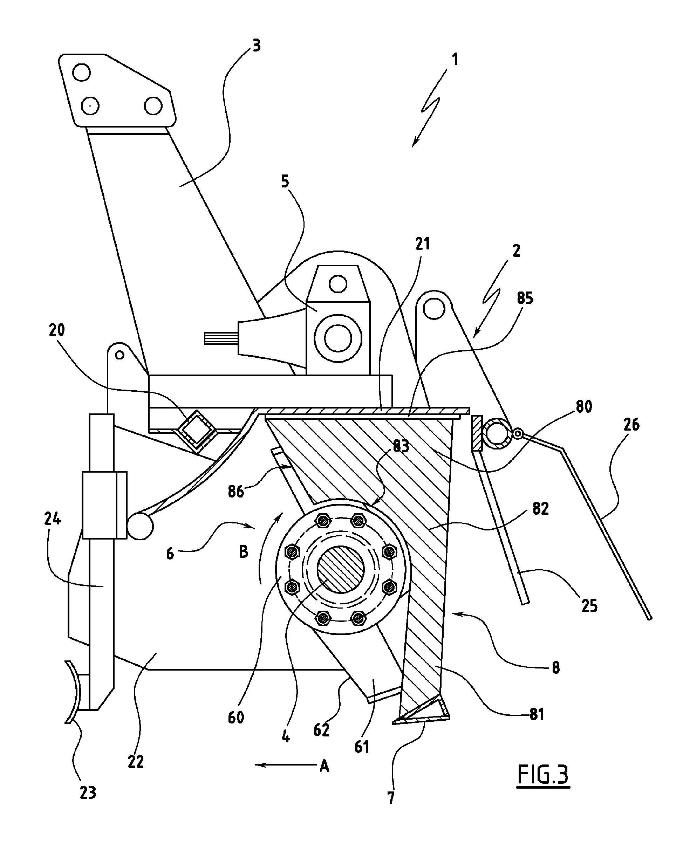

Each plate 8 is profiled such as to partially enclose the splining flange 60 of a corresponding milling tool 6 (see figure 3) and is interpositioned between the blades 61 fixed on the opposite faces of the flange 60.

In particular, the plate 8 comprises a wide upper portion 80 fixed to the supporting structure 2, and a lower narrower portion 81, extending behind the rotating shaft 4 and welded at a bottom thereof to the inclined side of the scraper blade 7.

The upper portion 80 is fixed to the supporting structure 2 by means of a horizontal connection plate 84 welded along the upper edge of the profiled plate 8, such as to lend the profiled plate 8 a substantially T-shaped transversal cross-section (see figure 2).

The extending wings of the connection plate 84 are bolted to a respective rib 85, the rib being attached to the lower surface of the covering plate 21 of the supporting structure 2.

The upper portion 80 and the lower portion 81 are connected to an intermediate portion 82 of variable width and exhibiting a forward edge 83 having a circular profile coaxial to the shaft 4 and having slightly greater diameter than the diameter of the flange 60.

In this way, the upper portion 80 provides a forward edge 86, facing in an opposite direction to the rotation direction B of the milling tools 6, the radial development of the forward edge 86 relative to the rotation axis of the shaft 4 varying from a minimum, slightly greater than the diameter of the splining flange, to a maximum, greater than the maximum diameter of the milling tool 6 defined by the ends of the radial blades 61.

In particular, the forward edge 86 exhibits a straight profile oriented radially of the rotation axis of the rotating shaft 4.

As illustrated in figure 1, the machine 1 also comprises a forward containment plate 23, extending parallel to the rotating shaft 4 substantially for the entire length of the rotating shaft 4, the forward plate 23 being fixed to the forward portion of the supporting structure 2 by means of a height-adjustable vertical arm 24.

The forward plate 23 serves principally to contain the forwardly-projected shredded material.

At the rear of the machine 1, the supporting structure 2 also supports a screen 25, for example a comb screen with parallel teeth, fixed to the structure 2 above and slightly backwardly inclined.

Positioned behind the screen 25 is a swing containment plate 26 made of sheet metal, superiorly hinged to the supporting structure 2 such as to enable oscillation thereof and serving to contain the shredded and screened product being projected in a backwards direction.

In operation, the supporting structure 2 of the machine 1 is placed on the bedding requiring treatment, supported on the scraper blade 7, and the machine is advanced in the forward direction A indicated in figure 1.

The highest portions of the bedding are levelled by the forward plate 23, and subsequently the bedding is raised by the scraper blade 7 which, when forward movement begins, immediately comes into contact with the floor.

The scraper blade 7 inserts under and raises the bedding, bringing it within range of the blades 61 of the milling tools 6, positioned a short distance above the ground and rotating in an opposite direction to the forward direction A, in the example in the clockwise direction B of figure 1.

The milling tools 6 are covered above and laterally by the box-shaped casing of the supporting structure 2, which retains and guides the bedding material.

Thus the blades 61 fragment the bedding and toss the bedding material first in the forward direction A, and then upwards and finally towards the rear against the rear screen 25.

The material is consequently fragmented by the blades 61 and reduced into homogeneous fragments by the screen 25, falling back to the ground in a soft and relatively dry form.

The forward plate 23 prevents the fragmented material from being projected forward in the direction of movement A, protecting the operator driving the tractor, and the swing containment plate 26 prevents the fragmented and screened material from being projected excessively rearwards, simultaneously avoiding the depositing of dust on dry bedding.

The rotational motion of the milling tools 6, contrary to the direction of forward movement A, encourages the overturning of the bedding with the drier components previously in contact with the floor being prevalently deposited in the upper layer.

If the bedding being treated is straw or a similar material, the blades 61 of the milling tools cannot immediately fragment the straw, which is thus raised and thrown backwards as described above.

Owing to the fact that the profiled plates 8 support the scraper blade 7, the straw is prevented from accumulating around the splining flanges 60 of the milling tools 6, because the interspace between the blades 61 is occupied by the profiled plates 8. The straw is also unable to accumulate between the side walls 22 of the support structure 2 and the adjacent milling tools 6, because the side walls 22 do not extend down to the ground.

Additionally, the forward edge 86 of each profiled plate 8 acts as a counter-blade, combining with the blades 61 of the relative milling tool 6 and thus performing a cutting operation on the straw.

In particular, the movement of the blades 61 relative to the forward edge 86 is substantially that of a scissors action (see figure 1), thereby the previously raised straw is cut and partially shredded, before being thrown backwards towards the screen 25.

In this respect, figure 2 illustrates that the thickness of each profiled plate 8 is only slightly inferior to that of the splining flange 60, such as to minimise the distance between the profiled plate 8 and the blades 61, thereby ensuring the effectiveness of the scissors-cutting effect.

Note also that the shredding of the straw is further assisted by the action of the scraper blade 7, positioned and calibrated relative to the blades 61 such that the scraper blade 7 acts as a counter-blade in relation to the curved ends of the blades 61, thus preventing dragging and/or formation of accumulations of straw at the side walls 22 of the supporting structure 2.

As a consequence of the design features described above, the machine 1 is capable of treating straw bedding, not only because it does not become clogged and jammed with the straw but also because after a few bedding processing cycles the machine is effectively capable of fragmenting the straw, consequently regenerating bedding made from straw or straw mixtures as for any other bedding of sawdust or rice husks, making the bedding suitable for avoid lesions to the palmed claws of the animals and in particular of turkeys.

Figures from 4 to 7 illustrate the invention applied to a machine 10 for the treatment of bedding for poultry farming, the machine 10 being designed for coupling to a typical motorized rotovator 100 or similar work machine.

The elements in common with the machine 1 described above are identical and indicated using the same numerical references.

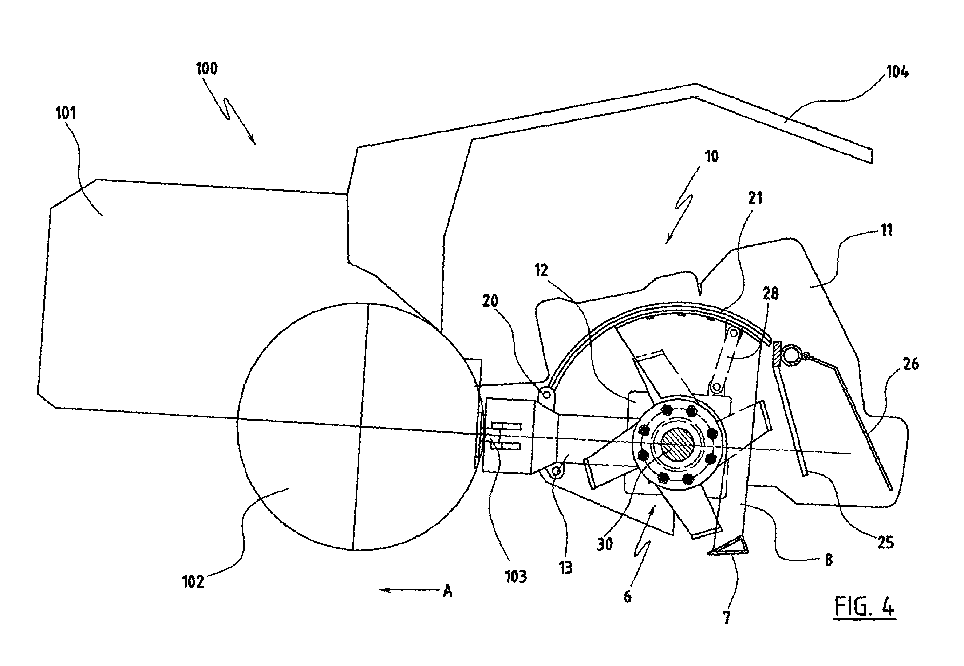

As illustrated in figure 4, a motorized rotovator 100 schematically comprises a carriage 101 provided with support wheels 102 and an installed motor group (not visible), the motor group supplying motive power to a power take-off point 103 located at the rear of the carriage 101. The carriage 101 is also provided with a pair of handlebars 104 extending rearwards, designed to be gripped by the user in order to push the carriage 101 over the ground.

The normal direction of movement of the motorized rotovator 100, and consequently of the machine 10 of the invention, is denoted by A in figure 4.

The machine 10 comprises an external cover in sheet metal 11, containing a horizontal-axis rotating shaft 4, supported centrally by a box 12 from which an internally hollow support arm 13 extends, designed to be removably attached to the rear portion of the motorized rotovator 100.

Rotatably housed inside the support arm 13 is a longitudinal transmission shaft (not visible) provided with means for coupling with the power take-off 103 of the motorized rotovator 100 and serving to transmit drive to the rotating shaft 4, through a mechanical transmission group contained inside the box 12.

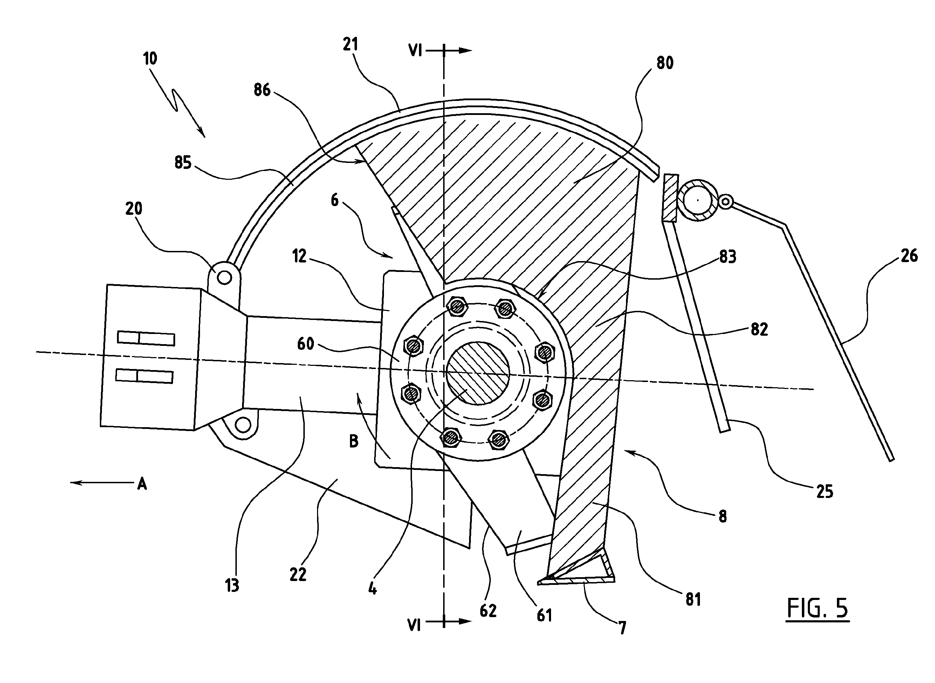

The normal direction of rotation of the shaft 4 is denoted by B in figure 5.

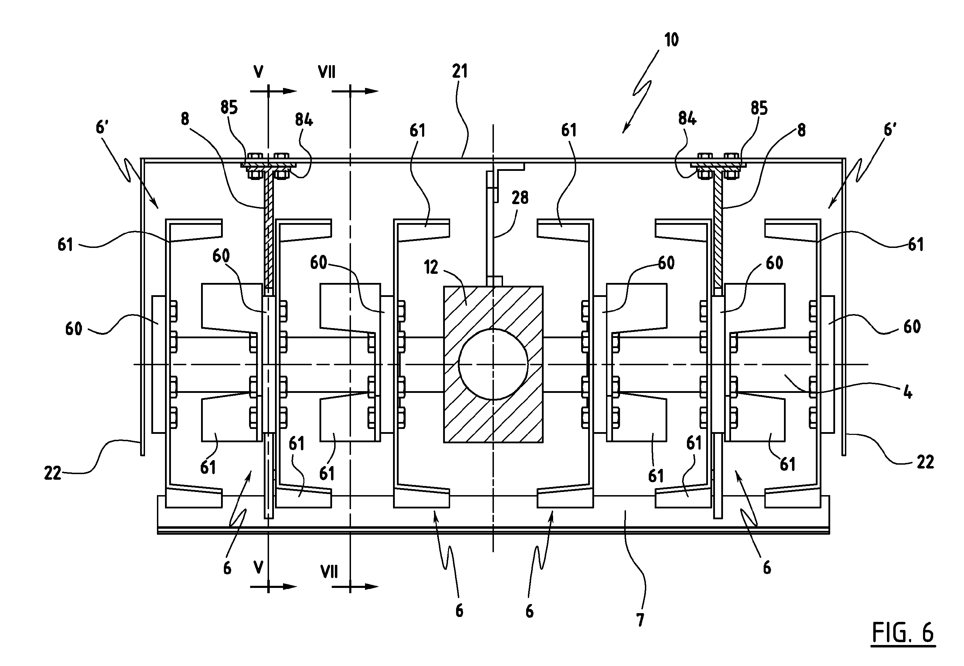

As illustrated in figure 6, four identical milling tools 6 are splined onto the rotating shaft 4, the milling tools 6 being arranged symmetrically of the central box 12 and each comprises a splining flange 60, on the opposite faces of which are fixed two pairs of identical radial blades 61 with curved extremities.

The milling tools 6 exhibit the same characteristics as those described earlier for the machine 1, but are of generally smaller dimensions.

Two further milling tools 6' are splined on the opposite ends of the rotating shaft 4, each of which comprises a splining flange 60 and a single pair of straight radial blades 61 fixed to the external face of the flange 60. The radial blades 61 of the milling tools 6' are straight in the sense that they are without curved ends, such as to cut the bedding material along the edge of the side walls 22.

Obviously the option of fitting straight radial blades on the ends of the shaft 4 could also be applied to the machine 1 described above.

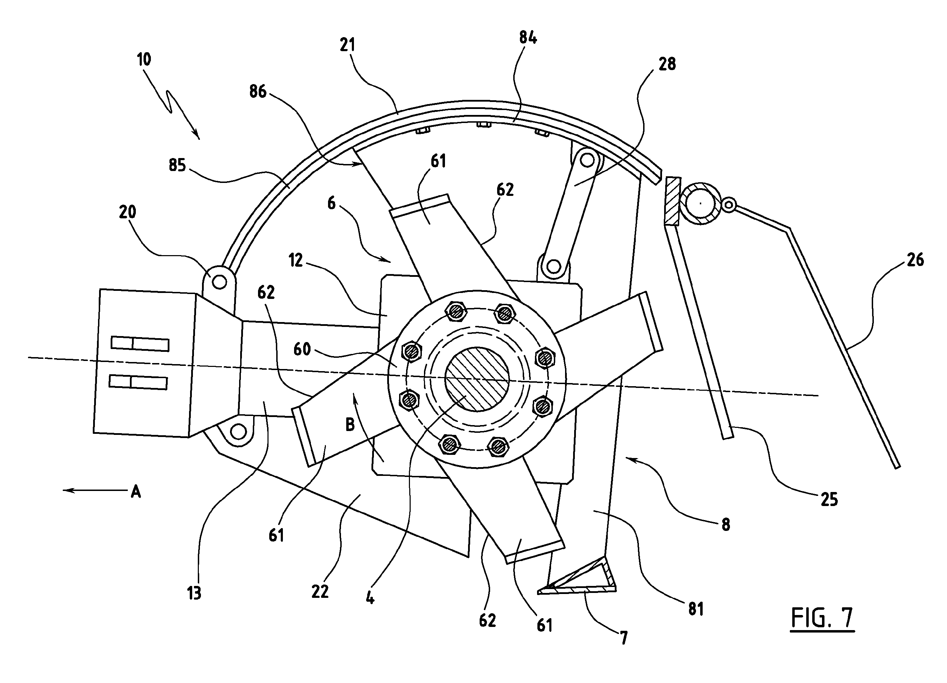

As illustrated in figure 7, a sturdy supporting cross-member 20 is fitted on an upper side of the support arm 13, at the free end of the support arm 13.

The supporting cross-member 20 is articulated to the forward extremity of a covering plate 21 of rounded profile, the opposite extremity thereof being supported by a rod 28 connected to the box 12.

The covering plate 21 extends for the entire length of the rotating shaft 4, such as to overlie and cover the milling tools 6 and 6', the covering plate 21 being closed at the ends by two descending side walls 22 (see figure 6).

The machine 10 also comprises a scraper blade 7, located below the rotating shaft 4, slightly towards the rear relative to the axis of the rotating shaft 4, such as to remain in contact with the ground without interfering with the rotation of the milling tools 6 and 6'.

The scraper blade 7 is defined by a profiled cross-member extending parallel to the rotating shaft 4 for an overall length which is approximately equal to the length of the rotating shaft 4, and exhibiting a constant transversal cross-section that is substantially wedge-shaped, with the vertex of the wedge facing towards the front of the machine 1.

As illustrated in figure 6, the scraper blade 7 is supported by two steel plates 8, arranged symmetrically relative to the box 12 supporting the rotating shaft 4, each of the plates 8 being oriented orthogonally of the rotating shaft 4 and substantially coplanar with the splining flange 60 of a respective milling tool 6, such as to extend into the interspace comprised between the pairs of blades 61 fixed on the opposite faces of the flange 60.

Similarly to what was previously described, each plate 8 is profiled such as to partially enclose the splining flange 60 of the corresponding milling tool 6 (see figure 5), being interposed between the blades 61 fixed on the opposite faces of the flange 60. In particular, the plate 8 comprises a wide upper portion 80 fixed to the supporting structure 2, and a narrower lower portion 81 extending behind the rotating shaft 4 and welded at the lower portion to the inclined side of the cross-member that defines the scraper blade 7. The upper portion 80 is fixed to the supporting structure 2 by means of a curved connection plate 84, which is welded along the upper edge of the profiled plate 8, such that the profiled plate 8 assumes a T-shaped transverse cross-section (see figure 6). The extending wings of the connection plate 84 are bolted to a respective rib 85 which is fixed below the covering plate 21.

The upper portion 80 and the lower portion 81 are connected by an intermediate portion 82 exhibiting a forward edge 83 having a curved profile, being coaxial to the shaft 4 and having a slightly greater diameter than the diameter of the flange 60.

In this way, the upper portion 80 provides a forward edge 86, facing in the opposite direction relative to the direction of rotation B of the milling tools 6, the radial development of which, relative to the axis of rotation of the shaft 4, ranges from a minimum, slightly greater than the diameter of the splining flange 60, to a maximum, superior to the maximum diameter of the milling tools 6 as defined by the extremities of the radial blades 61.

In particular, the forward edge 86 exhibits a straight profile oriented radially relative to the axis of rotation of the rotating shaft 4.

As illustrated in figure 5, the machine 10 also comprises a screen 25, for example a comb screen with parallel teeth, the screen 25 being fixed to the external cover 11, behind which screen 25 a containment plate 26 in steel plate is provided, hinged above to the cover 11.

The functioning and advantages of the machine 10 are alike to those described above for the machine 1 designed for use with agricultural tractors.

Obviously a technical expert in the sector could introduce numerous modifications of a practical-technical nature to the machines described above, without forsaking the ambit of the invention as claimed below.

## Claims

1. A machine for treatment of bedding in poultry rearing establishments, comprising a rotating shaft (4) on which at least a milling tool (6) is splined, a supporting structure (21) at least partially covering the rotating shaft (4) and the milling tool (6), and a scraper blade (7) located below the rotating shaft (4) for scraping and raising material in a zone underlying the milling tool (6), **characterized in that** the milling tool (6) is singly provided with a splining flange (60), opposite faces of the splining flange (60) being fitted with blades (61) extending radially of the flange (60), and also **characterized in that** the scraper blade (7) is fixed to the supporting structure (21) by means of at least a profiled plate (8) oriented perpendicular to the rotating shaft (4) and extending into an interspace between the blades (61) fixed on opposite faces of the splining flange (60) of the at least a milling tool (6).

2. The machine of claim 1, **characterized in that** a plurality of milling tools (6) is splined onto the rotating shaft (4), the at least a profiled plate (8) extending into the interspace between the blades (61) of one of the plurality of milling tools (6).

3. The machine of claim 2, **characterized in that** the scraper blade (7) is fixed to the supporting structure (21) by means of a plurality of profiled plates (8), each of the plurality of profiled plates (8) extending into the interspace between the blades (61) fixed on the opposite faces of the splining flange (60) of a respective milling tool (6).

4. The machine of claim 1, **characterized in that** the profiled plate (8) comprises a forward edge (86) facing in an opposite direction to a rotation direction of the milling tool (6), a radial extension of the profiled plate (8) relative to a rotation axis of the shaft (4) ranging from a minimum, comprised within a range going from a diameter of the splining flange (60) to a maximum diameter of the milling tool (6), to a maximum which is greater than a maximum diameter of the milling tool (6), the maximum diameter of the milling tool (6) being defined by the ends of the radial blades (61).

5. The machine of claim 4, **characterized in that** the forward edge (86) exhibits a straight profile oriented in a radial direction relative to the rotation axis of the rotating shaft (4).

6. The machine of claim 1, **characterized in that** a thickness of the profiled plate (8) is such that the profiled plate (8) exercises a cutting action in cooperation with the blades (61) of the relative milling tool (6).

7. The machine of claim 1, **characterized in that** the rotating shaft (4) is associated to means (5) for rotating said rotating shaft (4) in an opposite direction (B) to a forward direction (A) of the machine over a ground surface.

8. The machine of claim 1, **characterized in that** it comprises a screen (25) for screening particles of bedding raised by the scraper blade (4) and shredded by the milling tool (6).

9. The machine of claim 1, **characterized in that** a containment plate (26) is hinged at an adjustable inclination to a rear of the screen (25).

10. The machine of claim 1, **characterized in that** it comprises milling tools (6) exhibiting straight radial blades, splined to ends of the rotating shaft (4).
